# EUROPÄISCHE PATENTSCHRIFT

(11) **EP 2 768 713 B1**
(45) Veröffentlichungstag und Bekanntmachung des Hinweises auf die Patenterteilung: **13.04.2016**
(21) Anmeldenummer: 12756116.5
(22) Anmeldetag: 05.09.2012
(51) Int. Cl.: B62D 1/184, B62D 1/189, F16C 43/00, F16C 27/00, B62D 1/16

(54) **LENKSPINDELLAGEREINHEIT ZUR DREHBAREN LAGERUNG EINER LENKSPINDEL**
STEERING SHAFT BEARING UNIT FOR ROTATABLY MOUNTING A STEERING SHAFT
UNITÉ PALIER D'ARBRE DE DIRECTION POUR LE LOGEMENT ROTATIF D'UN ARBRE DE DIRECTION

(30) Priorität: 19.10.2011 DE 102011054598
(43) Veröffentlichungstag der Anmeldung: 27.08.2014
(73) Patentinhaber: ThyssenKrupp Presta Aktiengesellschaft, 9492 Eschen (LI)
(72) Erfinder: SCHNITZER, Rony, 9487 Gamprin (LI)
(74) Vertreter: Fechner, Thomas
(86) Internationale Anmeldenummer: PCT/EP2012/003719
(87) Internationale Veröffentlichungsnummer: WO 2013/056765

(56) Entgegenhaltungen:
- EP-A1- 0 600 700
- WO-A1-2007/026114
- GB-A- 2 431 980
- US-A1- 2007 069 513

## Beschreibung

Die vorliegende Erfindung betrifft eine Lenkspindellagereinheit zur drehbaren Lagerung einer Lenkspindel einer Lenksäule für ein Kraftfahrzeug, wobei die Lenkspindellagereinheit zumindest einen umfangsgeschlossenen Bereich zur Aufnahme zumindest eines Lagers zur drehbaren Lagerung der Lenkspindel und zumindest einen Befestigungsbereich zur Befestigung der Lenkspindellagereinheit an einem Konsolenteil der Lenksäule aufweist, wobei im Befestigungsbereich zumindest eine Durchführöffnung, insbesondere zwei Durchführöffnungen, zum Hindurchführen eines Spannbolzens der Lenksäule angeordnet ist bzw. sind, wobei der Befestigungsbereich und der umfangsgeschlossene Bereich als zunächst separate und dann miteinander verbundene Bauteile ausgebildet sind.

Weiters betrifft die Erfindung auch eine Lenksäule mit einer solchen Lenkspindellagereinheit sowie ein Verfahren zur Herstellung der Lenkspindellagereinheit.

Aus der EP 1 535 824 B1, der EP 1 547 902 A1, der EP 1 553 002 B1, der US 7,350,813 B2 und der JP 10-7003 sind Lenkspindellagereinheiten bekannt, welchen allen gemeinsam ist, dass die Lenkspindellagereinheit im Befestigungsbereich aufgeweitet wird, um geeignete Befestigungsflächen zur Befestigung der Lenkspindellagereinheit an einem Konsolenteil und damit an einer Karosserie eines Kraftfahrzeugs zur Verfügung zu stellen. Das Aufweiten des Mantelblechs im Befestigungsbereich hat zwei wesentliche Nachteile. Zum einen kommt es durch das Aufweiten zu einer Ausdünnung und damit zu einer Schwächung des Mantelblechs in diesem Bereich. Zum anderen ist der Vorgang der Aufweitung des Mantelblechs mit einem erhöhten technischen Aufwand verbunden.

Die US 2007/0069513 A1 offenbart eine Lenkspindellagereinheit bei der, an einem die Lenkspindel drehbar lagernden Rohr, Bügelglieder angeschweißt sind. Die ES 0 600 700 A1 und die WO 2007/026114 A1 offenbaren eine dazu ähnliche Technologie.

Aufgabe der Erfindung ist es, eine gattungsgemäße Lenkspindellagereinheit zur Verfügung zu stellen, die möglichst einfach und preiswert produziert werden kann und trotzdem hohe Anforderungen an die Steifigkeit erfüllt.

Dies wird erfindungsgemäß durch eine Lenkspindellagereinheit gemäß Patentanspruch 1 und ein Verfahren entsprechend Patentanspruch 11 erreicht.

Es ist somit bei der Lenkspindellagereinheit vorgesehen, dass die den Befestigungsbereich und den umfangsgeschlossenen Bereich oder die umfangsgeschlossenen Bereiche bildenden Bauteile in Richtung der Längsachse der Lenkspindel hintereinander angeordnet sind.

Günstig ist es dabei, wenn der Befestigungsbereich und der oder die umfangsgeschlossenen Bereiche direkt miteinander verbunden werden. Eine bevorzugte Möglichkeit der Verbindung ist das Verschweißen. Der Befestigungsbereich weist bevorzugt zwei Durchführöffnungen zum Hindurchführen des Spannbolzens auf.

Ein Grundgedanke der Erfindung ist es somit, eine Lenkspindellagereinheit aus mehreren vorgefertigten Bauteilen zusammenzufügen, wobei einer der zusammenzufügenden Bauteile der Befestigungsbereich und zumindest ein anderer ein umfangsgeschlossener Bereich ist, welcher der Aufnahme zumindest eines Lagers zur drehbaren Lagerung der Lenkspindel ist.

Durch die zunächst voneinander getrennte Anfertigung dieser Bauteile ist es möglich, die Bauteile schnell und kostengünstig herzustellen. Auch das miteinander Verbinden, insbesondere durch Verschweißen, ist einfach und kostengünstig durchführbar. Dadurch lässt sich die Lenkspindellagereinheit auf eine sehr wirtschaftliche Art und Weise herstellen. Außerdem ist es kein Problem bei dieser Vorgehensweise, die benötigten Anforderungen an die Steifigkeit zu erfüllen.

Es ist dabei vorgesehen, dass die den Befestigungsbereich und den umfangsgeschlossenen Bereich oder die umfangsgeschlossenen Bereiche bildenden Bauteile in Richtung der Längsachse der Lenkspindel hintereinander angeordnet sind. Dabei können der Befestigungsbereich und der jeweilige umfangsgeschlossene Bereich Stoß auf Stoß miteinander verbunden sein oder zumindest bereichsweise überlappen. Solche Überlappungen können z.B. zur Ausbildung von Verbindungsbe-reichen, in denen der Befestigungsbereich und der umfangsgeschlossene Bereich miteinander verbunden sind, dienen. Dies kann bei verschiedenen Verbindungsarten wie Verschweißen, Verschrauben und dergleichen hilfreich oder sogar notwendig sein.

Besonders bevorzugte Ausgestaltungsformen der Erfindung sehen vor, dass der Befestigungsbereich einstückig ausgebildet ist. So ist es z.B. möglich, diesen Befestigungsbereich, vorzugsweise genau ein, als Strangpressprofil auszuführen. Alternativ kann der Befestigungsbereich z.B. auch als, vorzugsweise genau, ein Blechumformteil ausgeführt sein.

Andere Varianten sehen vor, dass der Befestigungsbereich aus mehreren Teilen zusammengesetzt, vorzugsweise zusammengeschweißt, ist. Auch bei diesen Einzelteilen kann es sich um Strangpressprofile oder Blechumformteile oder Gussteile handeln. Günstig ist es in diesem Zusammenhang jedenfalls, wenn die Lenkspindellagereinheit im Befestigungsbereich zumindest bereichsweise umfangsgeschlossen ausgebildet ist.

Auch die umfangsgeschlossenen Bereiche zur Aufnahme zumindest eines Lagers können einstückig z.B. auch als Strangpressprofil oder Blechumformteil vorgefertigt sein. So ist es z.B. denkbar, dass diese Bereiche als Rohrstücke ausgebildet sind und dann am Befestigungsbereich befestigt werden. Natürlich ist es aber auch möglich, dass der Befestigungsbereich aus mehreren Teilen zusammengesetzt, vorzugsweise zusammengeschweißt, ist. Auch hier kommt das Zusammensetzen aus mehreren Strangpressprofilen und/oder Blechumformteilen in Frage.

Ein Verfahren zur Herstellung einer erfindungsgemäßen Lenkspindellagereinheit sieht günstigerweise vor, dass der Befestigungsbereich und der umfangsgeschlossene Bereich zunächst als separate Bauteile ausgebildet und dann miteinander, vorzugsweise direkt, verbunden, vorzugsweise verschweißt, werden.

Bevorzugte Ausgestaltungsformen der Erfindung sehen vor, dass die Lenkspindellagereinheit zumindest zwei umfangsgeschlossene Bereiche zur Aufnahme jeweils zumindest eines Lagers zur drehbaren Lagerung der Lenkspindel aufweist und der Befestigungsbereich zwischen den umfangsgeschlossenen Bereichen angeordnet ist. Besonders günstig herzustellende Varianten sehen dabei vor, dass es sich um genau zwei umfangsgeschlossene Bereiche zur Aufnahme jeweils zumindest eines Lagers handelt. Der bzw. die umfangsgeschlossenen Bereiche der Lenkspindellagereinheit zur Aufnahme zumindest eines Lagers können rohrförmig ausgebildet sein.

Bei diesen Ausgestaltungsformen ist günstigerweise vorgesehen, dass die einzelnen umfangsgeschlossenen Bereiche nicht direkt miteinander verbunden sind, sondern ausschließlich über den zwischen ihnen angeordneten Befestigungsbereich. In diesem Sinn ist es somit günstig, wenn die umfangsgeschlossenen Bereiche ausschließlich über den zwischen ihnen angeordneten Befestigungsbereich miteinander verbunden sind.

Es kann aber auch vorgesehen sein, dass die Lenkspindellagereinheit nur genau einen umfangsgeschlossenen Bereich zur Aufnahme zumindest eines Lagers zur drehbaren Lagerung der Lenkspindel aufweist. Ein zweites Lager für die Lenkspindel kann dann z.B. in einer Lenkkraftunterstützungseinheit oder in dem Konsolenteil der Lenksäule angeordnet sein.

Varianten der Erfindung können auch vorsehen, dass der Befestigungsbereich zumindest zwei voneinander beabstandete Befestigungsstege aufweist. Diese können, vorzugsweise jeweils, frei auskragende Enden aufweisen. Es kann dann auch vorgesehen sein, dass in den Befestigungsstegen jeweils eine der Durchführöffnungen angeordnet ist. Zur weiteren Aussteifung kann vorgesehen sein, dass die frei auskragenden Enden der Befestigungsstege mittels eines gesonderten Verbindungsbleches miteinander verbunden sind. Besonders bevorzugte Varianten sehen dabei vor, dass das Verbindungsblech einen v-förmigen Querschnitt aufweist. Das gesonderte Verbindungsblech kann z.B. mittels Schweißen an den Befestigungsstegen und insbesondere an deren frei auskragenden Enden befestigt sein. Der Umbiegebereich des v-förmigen Querschnitts des Verbindungsblechs verläuft günstigerweise parallel zu einer Längsachse der Lenkspindel. Besonders günstig ist es, wenn dieser Umbiegebereich bzw. die Spitze der v-Form des gesonderten Verbindungsbleches längserstreckt ist. Sie kann mit ihrer Längserstreckung in einer Symmetrieebene des Befestigungsbereichs verlaufen.

Zur Erhöhung der Steifigkeit der Lenkspindellagereinheit, insbesondere im Bereich der Befestigungsstege, kann vorgesehen sein, dass in der Lenkspindellagereinheit zumindest eine Lenkspindellagereinheitsicke angeordnet ist. Die, vorzugsweise jede, Durchführöffnung kann, vorzugsweise jeweils, in einer Lenkspindellagereinheitsicke angeordnet sein. Besonders bevorzugte Ausgestaltungsformen der Erfindung sehen in diesem Zusammenhang vor, dass die Lenkspindellagereinheit genau zwei Lenkspindellagereinheitsicken aufweist und in jeder Lenkspindellagereinheitsicke eine Durchführöffnung zum Hindurchführen eines an sich bekannten Spannbolzens angeordnet ist. Günstigerweise weist jeder frei auskragende Befestigungssteg genau eine Lenkspindellagereinheitsicke auf, in der jeweils eine Durchführöffnung angeordnet ist. Die Lenkspindellagereinheitsicken sind günstigerweise in der Nähe der frei auskragenden Enden der Befestigungsstege angeordnet. Bevorzugt handelt es sich bei den Durchführöffnungen um Langlöcher. Es ist weiters von Vorteil, wenn die Durchführöffnung jeweils im Sickengrund der Lenkspindellagereinheitsicke angeordnet ist. Besonders vorteilhaft ist es, wenn die Durchführöffnung etwa symmetrisch zwischen den den Sickengrund begrenzenden etwa parallel verlaufenden Seitenwänden oder Rändern im Sickengrund angeordnet ist.

Bei den Lenkspindellagereinheitsicken handelt es sich günstigerweise um sogenannte Innensicken. Diese sind dadurch gekennzeichnet, dass die Lenkspindellagereinheitsicke bzw. die Lenkspindellagereinheitsicken als in Richtung in einen Innenraum des Befestigungsbereiches hinein vertiefte Sicke bzw. Sicken ausgebildet ist bzw. sind.

Bei bevorzugten Ausgestaltungsformen der Erfindung ist vorgesehen, dass die Lenkspindellagereinheit im Befestigungsbereich und/oder im umfangsgeschlossenen Bereich zur Aufnahme zumindest eines Lagers und/oder überall einwandig ausgebildet ist. Dies gilt insbesondere für den Befestigungsbereich aber bevorzugt auch für den umfangsgeschlossenen Bereich zur Aufnahme zumindest eines Lagers zur drehbaren Lagerung der Lenkspindel.

Günstigerweise besteht die Lenkspindellagereinheit aus Metall, vorzugsweise aus Metallblechen. Bevorzugt handelt es sich um Stahl, Aluminium, Magnesium oder Legierungen, die diese Metalle enthalten. Es können aber auch Verbundwerkstoffe, z.B. Kohlenstofffaser- Verbundwerkstoffe, oder Gussteile oder ein Mix aus den genannten Werkstoffen zum Einsatz kommen.

Neben der Lenkspindellagereinheit an sich betrifft die Erfindung auch eine Lenksäule für ein Kraftfahrzeug mit einem, zur Befestigung der Lenksäule an einer Karosserie des Kraftfahrzeugs vorgesehenen Konsolenteil, welches zumindest zwei Seitenwangen aufweist, wobei eine erfindungsgemäße Lenkspindellagereinheit mit ihrem Befestigungsbereich zwischen den Seitenwangen angeordnet und mittels der Befestigungsstege an den Seitenwangen gehalten ist.

Bei erfindungsgemäßen Lenksäulen handelt es sich günstigerweise um sogenannte verstellbare Lenksäulen. Diese sind, wie an sich bekannt, dadurch gekennzeichnet, dass die Lenkspindel samt Lenkspindellagereinheit gegenüber dem Konsolenteil in ihrer Position verstellbar ist. Hierdurch kann die Position des Lenkrades an den jeweiligen Fahrer des Fahrzeugs angepasst werden. Besonders bevorzugte Ausgestaltungsformen erfindungsgemäßer Lenksäulen sehen vor, dass die Lenkspindel in ihrer Längsrichtung und/oder in einer zur Längsrichtung orthogonalen Höhenrichtung verstellbar ist.

Bevorzugte Ausgestaltungsformen solcher Lenksäulen sehen vor, dass zwischen zumindest, vorzugsweise genau, zwei Seitenwangen des zur Befestigung der Lenksäule an einer Karosserie des Kraftfahrzeugs vorgesehenen Konsolenteils die Lenkspindellagereinheit zur drehbaren Lagerung der Lenkspindel der Lenksäule gelagert ist. Zwischen den Seitenwangen des Konsolenteils und der Lenkspindellagereinheit ist bei bevorzugten Ausgestaltungsformen ein Lagerteil angeordnet. Ein Spannbolzen der Lenksäule kann die Seitenwangen des Konsolenteils und das Lagerteil und die Lenkspindellagereinheit durchdringen. Das Lagerteil kann dabei zumindest eine Lagerteilsicke und die Lenkspindellagereinheit zumindest eine Lenkspindellagereinheitsicke aufweisen, wobei die Lagerteilsicke zumindest bereichsweise flächig an der Lenkspindellagereinheitsicke anliegt. Bei solchen Ausgestaltungsformen ist besonders bevorzugt vorgesehen, dass der Spannbolzen das Lagerteil in der Lagerteilsicke und die Lenkspindellagereinheit in der Lenkspindellagereinheitsicke durchdringt.

Die erfindungsgemäße Lenksäule kann mit Vorteil in ihrer Höhe, gleichbedeutend mit ihrer Neigung, und/oder in ihrer Länge einstellbar ausgebildet sein. Bevorzugt sind allgemein kostengünstige höhen- und längenverstellbare Lenksäulen, die eine Feststelleinrichtung umfassen, das die wahlweise Freigabe (= geöffneter Zustand der Feststelleinrichtung) oder Fixierung (=geschlossener Zustand der Feststelleinrichtung) der jeweiligen Verstellungsrichtung ermöglicht. Der Spannbolzen, als Teil einer derartigen Feststelleinrichtung, im Verbund mit weiteren Spannteilen, wie beispielsweise einem Klemmstück, einer Nockenplatte, einer Spannmutter, kann dabei in einfacher Weise zur wahlweisen Freigabe oder Fixierung der je nach Ausführung möglichen Verstellung in Längsrichtungen und/oder Höhenrichtung in bekannter Weise dienen. Unabhängig von einer formschlüssigen oder kraftschlüssigen (auch reibschlüssigen) Fixierung, ist es stets günstig, wenn hohe Presskräfte im geschlossenen Zustand der Feststelleinrichtung auf die Verbindungen zwischen Lenkspindellagereinheit und Lagerteil einerseits und Lagerteil und Konsolenteil andererseits aufgebracht sind.

Durch das Durchdringen von Lenkspindellagereinheitsicke und Lagerteilsicke mittels des Spannbolzens werden die vom Spannbolzen ausgeübten Klemmkräfte direkt auf die beiden genannten Sicken übertragen, sodass mit einer einfachen Konstruktion große Kräfte übertragen werden können. Dies hilft auch, die Anzahl der Bauteile zu verringern. Im geöffneten Zustand, in dem über den Spannbolzen keine oder nur geringfügige Klemmkräfte übertragen werden, wird ebenfalls eine hohe Führungsgenauigkeit bei der Verstellung erreicht. Die Steifigkeit kann dabei weiter erhöht werden, wenn das Lagerteil und die Lenkspindellagereinheit, an den parallel zu den beiden Seitenwangen ausgerichteten Oberflächen, beidseits der Lenkspindel jeweils korrespondierend eine Lenkspindellagereinheitsicke und eine Lagerteilsicke aufweisen, die von einem Spannbolzen durchsetzt sind. Dies hilft auch, die Anzahl der Bauteile und/oder den Materialeinsatz zur Darstellung der Lenksäule zu verringern. Im geöffneten Zustand, in dem über den Spannbolzen keine oder nur geringfügige Klemmkräfte übertragen werden, wird durch die erfindungsgemäße Anordnung ohne großen Aufwand ein spielarmes Führungssystem erreicht. Dem Lenker des Kraftfahrzeuges wird somit auch in diesem Zustand ein stabiles und sattes Gefühl beim Anfassen des an der Lenkspindel der Lenksäule befestigten Lenkrades gegeben. Die Lagerteilsicke und die Lenkspindellagereinheitsicke sowie eine weiter unten noch genannte, gegebenenfalls auch vorhandene Konsolenteilsicke werden günstigerweise zueinander korrespondierend ausgebildet. In diesem Sinne ist bevorzugt auch vorgesehen, dass die Lagerteilsicke in einer Schnittebene durch eine Längsmittelachse des Spannbolzens gesehen, geometrisch ähnlich zur Lenkspindellagereinheitsicke ausgebildet ist. Das gleiche gilt günstigerweise auch, soweit vorhanden, für eine Konsolenteilsicke. Weiters ist es auch günstig, wenn die Lagerteilsicke und/oder die Lenkspindellagereinheitsicke und/oder die gegebenenfalls vorhandene Konsolenteilsicke in sich achsensymmetrisch bezüglich einer Längsmittelachse des Spannbolzens ausgebildet ist bzw. sind.

Günstig ist es, wenn die genannten Sicken jeweils mit ihren Seitenwänden, vorzugsweise paarweise, aneinander anliegen. Um in Achsrichtung aber besonders hohe Klemmkräfte übertragen zu können, sehen bevorzugte Ausgestaltungsformen der Erfindung vor, dass die Lagerteilsicke und die Lenkspindellagereinheitsicke und soweit vorhanden auch die Konsolenteilsicke jeweils Seitenwände und jeweils einen die Seitenwände miteinander verbindenden Sickengrund aufweisen. Besonders vorteilhaft ist die Ausbildung von Seitenwänden in den jeweiligen Sicken, die im Bereich von 30° bis 60°, bevorzugt 45° bis 60° geneigt sind, gegenüber dem Sickengrund. Im geschlossenen Zustand der Feststelleinrichtung liegen die Lagerteilsicke und die Lenkspindellagereinheitsicke mit ihren jeweiligen Seitenwänden, vorzugsweise paarweise, mit Vorspannung aneinander an. Der Spannbolzen ist günstigerweise jeweils durch eine Öffnung im jeweiligen Sickengrund hindurchgeführt.

Die Ausbildung des Sickengrundes, sowohl in der Lagerteilsicke als auch in der Lenkspindellagereinheitsicke, die parallel, oder zumindest nahezu parallel, zueinander ausgerichtet sind, ermöglicht den Ausgleich von Toleranzen bei gleichzeitiger Erhöhung der Kontaktspannung im Kontakt zwischen den Seitenwänden der beiden Sicken. In diesem Fall berühren sich die beiden Sickengründe im geschlossenen Zustand der Feststelleinrichtung nicht. Alternativ ist es jedoch denkbar und möglich unter Einschränkung der Toleranz, diesen Kontakt zwischen den jeweiligen Sickengründen gerade vorzusehen, wobei ebenfalls auf den Kontakt zwischen den Seitenwänden eine erhebliche Presskraftsteigerung ermöglicht wird.

Wie bereits angesprochen, sehen bevorzugte Ausgestaltungsformen der Erfindung vor, dass die Seitenwangen des Konsolenteils jeweils zumindest eine Konsolenteilsicke aufweisen und der Spannbolzen die Seitenwangen in der Konsolenteilsicke durchdringt und die Konsolenteilsicke, vorzugsweise auf zwei einander gegenüberliegenden Seiten des Spannbolzens, zumindest bereichsweise flächig an der Lagerteilsicke anliegt.

Durch das Hindurchführen des Spannbolzens durch die Lagerteilsicke, die Lenkspindellagereinheitsicke und gegebenenfalls auch die Konsolenteilsicke kann eine äußerst kompakte Bauweise erreicht werden. Der Spannbolzen kann sehr nah an der, in der Lenkspindellagereinheit drehbar gelagerten Lenkspindel angeordnet werden. Dies führt zu einer gleichermaßen kompakten wie auch stabilen Bauweise. Außerdem wirken die über den Spannbolzen übertragenen Kräfte sehr unmittelbar auf die genannten Sicken ein.

Günstigerweise ist vorgesehen, dass der Bolzen die Lagerteilsicke und die Lenkspindellagereinheitsicke sowie die gegebenenfalls vorhandene Konsolenteilsicke mittig durchdringt, was für eine symmetrische, auf alle Seitenwände der jeweiligen Sicken verteilte Krafteinleitung weiters günstig ist. Der Sickengrund ist günstigerweise so breit ausgeführt, dass der Spannbolzen vollständig durch eine Öffnung im Sickengrund hindurchgeführt werden kann. Weiters kann der Sickengrund seitlich zu den genannten Öffnungen auch noch Bereiche aufweisen, mit denen er an den Sickengründen der anderen Sicken abgestützt ist. Die genannten Öffnungen bzw. Aussparungen in den Sicken bzw. Sickengründen, durch die der Spannbolzen durchgeführt ist, sollten günstigerweise größer als der Durchmesser des Spannbolzens sein, sodass der Spannbolzen nicht direkt an den Rändern der genannten Öffnungen bzw. Aussparungen anliegt. Dies hat beispielsweise den Vorteil, dass im Falle eines Fahrzeugcrash keine Rotationsbewegung des Spannbolzens ausgelöst wird. Weiters wird der Verschleiß in den Langlöchern reduziert.

Der Vollständigkeit halber wird darauf hingewiesen, dass es sich bei der Lenkspindellagereinheitsicke um eine Sicke in der Lenkspindellagereinheit, bei der Lagerteilsicke entsprechend um eine Sicke im Lagerteil und bei der Konsolenteilsicke wiederum entsprechend um eine Sicke in dem Konsolenteil handelt. Eine Sicke ist, wie allgemein bekannt, eine rinnenförmige Vertiefung bzw. Kehlung. Geometrisch ähnlich sind zwei Sicken, wenn sie sich durch eine Ähnlichkeitsabbildung, d.h. eine geometrische Abbildung die sich aus zentrischen Streckungen und Kongruenzabbildung wie Verschiebung, Drehung, Spiegelung zusammensetzen lässt, in einander übergeführt werden können.

Im Sinne der Erfindung ist es denkbar und möglich, die Sicken als sogenannte Innensicken oder auch als Außensicken auszubilden. Bevorzugt sind die genannten Sicken als sogenannte Innensicken ausgebildet, da in diesem Fall eine einfachere Konstruktion zu einer entsprechend stabilen Lenksäule führt. Als Innensicke ist im Sinne der Erfindung besonders bevorzugt eine Sicke zu verstehen, deren Boden etwa senkrecht zur Ebene der Seitenwangen in Richtung zur Lenkspindel hin vertieft ist, wobei der Boden im Wesentlichen parallel zur Ebene der Seitenwangen verläuft. Hierdurch wird eine kompakte Bauweise erreicht. Zusätzlich können auch hohe Kräfte übertragen werden. In diesem Sinne ist es somit günstig, wenn die Lagerteilsicke und die Lenkspindellagereinheitsicke und soweit vorhanden auch die Konsolenteilsicke als in Richtung in den Bereich zwischen den Seitenwangen des Konsolenteils hinein vertiefte Sicken ausgebildet sind. Im Sinne einer günstigen und möglichst effektiven Kraftübertragung sehen bevorzugte Varianten weiters vor, dass die Lagerteilsicke auf zwei einander gegenüberliegenden Seiten des Spannbolzens zumindest bereichsweise flächig, oder alternativ zumindest bereichsweise linienförmig, an der Lenkspindellagereinheitsicke anliegt. Im Sinne einer spielarmen Führung und der Möglichkeit auch im Crashfall hohe Kräfte aufnehmen zu können, sehen besonders bevorzugte Ausgestaltungsformen der Erfindung vor, dass die Lagerteilsicke und/oder die Lenkspindellagereinheitsicke und/oder die gegebenenfalls vorhandene Konsolenteilsicke längserstreckt ausgebildet ist bzw. sind. Hierdurch wird eine besonders große Führungslänge und damit eine ideale Kraftabstützung bei Drehmomentbelastung wie z.B. im Crashfall geschaffen.

Besonders bevorzugte Ausgestaltungsformen der Erfindung sehen vor, dass das Lagerteil einstückig z.B. aus einem gebogenen, vorzugsweise U-förmig gebogenen, Blechstreifen gebildet ist. Im Sinne einer stabilen Lagerung weist das Lagerteil zumindest zwei voneinander entfernte Befestigungsstellen auf, an denen es direkt oder indirekt an der Karosserie des Kraftfahrzeugs befestigt werden kann. In diesem Sinne sieht eine bevorzugte Ausgestaltungsform der Erfindung vor, dass das Lagerteil an zumindest einem, vom Spannbolzen distanzierten Ort eine fixe oder ein Schwenkgelenk bildende Lagerteilbefestigung zur Befestigung des Lagerteils an der Karosserie des Fahrzeugs oder am Konsolenteil aufweist. Die Lagerteilbefestigung kann dabei verstärkt bzw. versteift ausgeführt sein. Im Sinne einer möglichst stabilen, spielarmen Lagerung ist es günstig, wenn die Entfernung zwischen Spannbolzen und Lagerteilbefestigung zumindest der halben, vorzugsweise zumindest dreiviertel der, Länge des Lagerteils entspricht.

Bevorzugte Varianten der Erfindung sind, wie bereits erwähnt, als sogenannte verstellbare Lenksäule ausgeführt. So kann vorgesehen sein, dass das Lagerteil zur Bereitstellung einer Höhenverstellbarkeit der Lenksäule schwenkbar gelagert ist. Weiters kann vorgesehen sein, dass die Lenkspindellagereinheit zur Bereitstellung einer Längsverstellbarkeit der Lenksäule in Längsrichtung der Lenkspindel verschiebbar im Lagerteil gelagert ist. Besonders bevorzugte Ausgestaltungsformen von erfindungsgemäßen Lenksäulen sind sowohl höhenverstellbar als auch längsverstellbar. Sie weisen somit eine Kombination der zuletzt genannten Merkmale auf. Der Vollständigkeit halber wird aber darauf hingewiesen, dass es sich bei erfindungsgemäßen Lenksäulen auch um sogenannte starre Lenksäulen handeln kann, welche keine der genannten Verstellmöglichkeiten aufweisen.

Es ist auch zu berücksichtigen, dass die bezüglich der Sicken genannten Merkmale der Lenksäule nicht nur dazu eingesetzt werden können, um eine möglichst spielarm verstellbare Lenksäule zu schaffen. Vielmehr kann das Durchdringen der genannten Sicken durch den Spannbolzen auch dazu genutzt werden, eine Energieabsorptionseinrichtung für die genannte starre oder aber auch verstellbare Lenksäule zu schaffen, indem die genannten Sicken als an sich bekannte, sich im Crashfall umformende Crashsicken ausgeführt sind. Durch die Ausgestaltung der Sicken kann im Crashfall zum Energieabbau ein Durchrutschen über die Sickenführung ermöglicht werden. Bei verstellbaren Lenksäulen, bei denen die genannten Sicken zusätzlich auch als Crashsicken ausgebildet sind, befinden sich die für die Energieumwandlung im Falle eines Crashs relevanten Bereiche der Sicken günstigerweise am Ende der Verstellwege für die Lenksäulenverstellung.

Weitere Merkmale und Einzelheiten bevorzugter Ausgestaltungsformen der Erfindung werden anhand der nachfolgenden Figurenbeschreibung dargelegt. Es zeigen:
- Fig. 1 und 2: ein erstes erfindungsgemäßes Ausführungsbeispiel in Form einer längenverstellbaren Lenksäule;
- Fig. 3 und 4: eine zweite erfindungsgemäß ausgebildete Lenksäule, welche höhen- und längenverstellbar ist;
- Fig. 5: eine Abwandlungsform des zweiten erfindungsgemäßen Ausführungsbeispiel;
- Fig. 6: den Bereich A aus Fig. 2;
- Fig. 7: den Bereich B aus Fig. 4;
- Fig. 8: ein Beispiel, wie der Befestigungsbereich einstückig ausgebildet sein kann;
- Fig. 9 und 10: Darstellungen zur Ausbildung einer erfindungsgemäßen Lenkspindellagereinheit mit dem Befestigungsbereich nach Fig. 8;
- Fig. 11: eine alternative Ausgestaltungsform des Befestigungsbereiches.

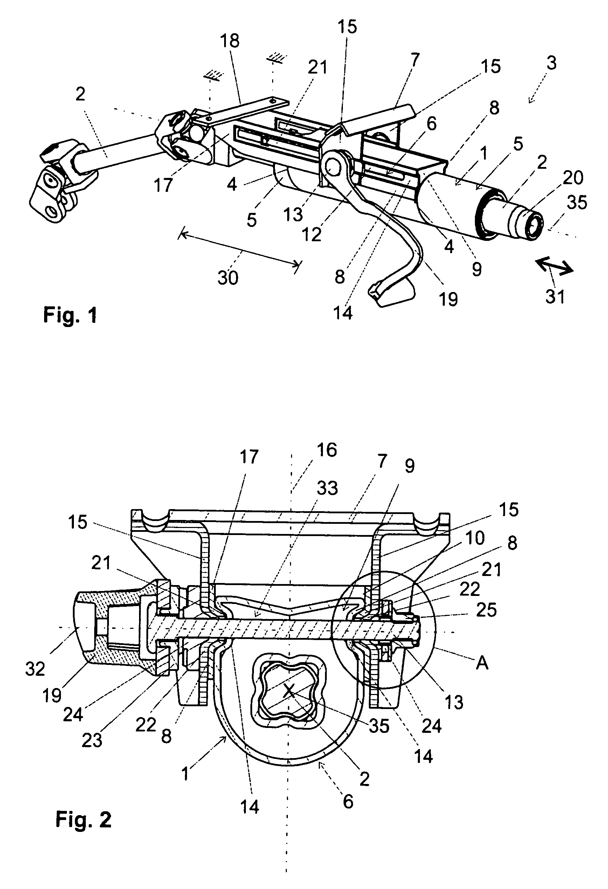

In Fig. 1 ist eine erste Lenksäule 3 mit einer erfindungsgemäßen Lenkspindellagereinheit 1 dargestellt. Mittels des Konsolenteils 7 kann diese an einer Karosserie eines hier nicht dargestellten Fahrzeugs befestigt werden. Fig. 2 zeigt einen Vertikalschnitt durch diese Lenksäule 3 entlang des Spannbolzens 13. Insbesondere in Fig. 2 ist gut zu sehen, dass das Konsolenteil 7 zwei Seitenwangen 15 aufweist, zwischen denen die Lenkspindellagereinheit 1 gehalten ist. In der Lenkspindellagereinheit 1 ist die Lenkspindel 2 um ihre Längsachse 35 drehbar gelagert. Der Lenkradanschluss 20 der Lenkspindel 2 ist zur Befestigung eines hier nicht dargestellten Lenkrades an der Lenkspindel 2 vorgesehen. Zwischen den Seitenwangen 15 und der Lenkspindellagereinheit 1 befindet sich das Lagerteil 17. Am vom Spannbolzen 13 abgewandten Ende ist das Lagerteil 17 mittels der Lagerteilbefestigung 18, im gezeigten Ausführungsbeispiel an der hier nicht dargestellten Karosserie des Kraftfahrzeugs befestigbar. Es sind auch Ausgestaltungsformen denkbar, bei denen die Lagerteilbefestigung 18 an dem Konsolenteil 7 befestigt wird. Im ersten Ausführungsbeispiel ist die Lagerteilbefestigung 18 jedenfalls starr ausgeführt. Die Länge des Lagerteils 17 ist in der Zeichnung mit dem Bezugszeichen 30 versehen. Wie bereits eingangs erläutert, ist es günstig, wenn die Lagerteilbefestigung 18 möglichst weit von dem Spannbolzen 13 entfernt ist. Hierzu sollte, wie bereits ausgeführt, die Entfernung zwischen Spannbolzen 13 und Lagerteilbefestigung 18 zumindest die Hälfte, vorzugsweise zumindest Dreiviertel, der Länge 30 des Lagerteils 17 betragen.

Beim gezeigten Ausführungsbeispiel gemäß der Fig. 1 und 2 handelt es sich um eine längenverstellbare Lenksäule 3. Die Verstellrichtungen sind mit dem Doppelpfeil 31 gekennzeichnet. Dies entspricht den Längsrichtungen der Lenkspindel 2.

Um einerseits die Verstellung in Längsrichtungen 31 zuzulassen, andererseits während des Betriebes aber eine ausreichend feste Befestigung der Lenkspindellagereinheit 1 an dem Konsolenteil 7 zu gewährleisten, ist bei dieser Lenksäule, wie an sich bekannt, eine Feststelleinrichtung vorgesehen, welche unter anderem den Spannbolzen 13 und den Betätigungshebel 19 umfasst. Natürlich sind auch motorische Betätigungen der Feststelleinrichtung denkbar. In solchen Fällen kann dann auf den Betätigungshebel 19 verzichtet werden. Feststelleinrichtungen mit Spannbolzen 13 für verstellbare Lenksäulen 3 sind beim Stand der Technik in einer Vielzahl von Ausgestaltungsformen bekannt. Die hier gezeigten Ausführungsbeispiele dienen lediglich als Veranschaulichung einer von vielen verschiedenen möglichen Varianten, wie das Spannen und Entspannen der Feststelleinrichtung von statten gehen kann.

Im gezeigten Ausführungsbeispiel ist eine Nockenplatte 23 drehfest mit dem Betätigungshebel 19 verbunden. Die Nocken dieser Nockenplatte 23 wirken mit entsprechenden Gegennocken des Klemmstücks 24 zusammen. Das Klemmstück 24 ist drehfest mit dem Konsolenteil 7 verbunden. Auf der gegenüberliegenden Seite ist der Spannbolzen 13 mit einer Spannmutter 25 fixiert. Auch dort befindet sich ein Klemmstück 24 oder ein Axiallager, welches zwischen Spannmutter 25 und der entsprechenden Seitenwange 15 des Konsolenteils 7 angeordnet ist. Durch Drehen des Betätigungshebels 19 um die Mittenlängsachse 32 des Spannbolzens 13 wird die Nockenplatte 23 gegen das dazu benachbart angeordnete Klemmstück 24 verdreht. Je nach Stellung der beteiligten Nocken zueinander befindet sich dann die Feststelleinrichtung im geschlossenen Zustand, in dem die Lenkspindellagereinheit 1 zumindest bei den im normalen Betrieb auftretenden Kräften am Konsolenteil 7 fixiert ist. Durch entsprechendes Drehen des Betätigungshebels 19 kann dann die Feststelleinrichtung in den geöffneten Zustand gebracht werden, in dem ein Verstellen in Längsrichtungen 31 der Lenkspindellagereinheit 1 relativ zum Konsolenteil 7 und damit eine Einstellung der Position des Lenkrades möglich ist. Solche Feststelleinrichtungen sind an sich bekannt und müssen hier nicht weiter erläutert werden.

Wie insbesondere in der Schnittdarstellung gemäß Fig. 2 gut zu sehen ist, weisen sowohl das Lagerteil 17 als auch die Lenkspindellagereinheit 1 jeweils Sicken auf, mit denen sie ineinander gelagert sind. Konkret ist im ersten Ausführungsbeispiel vorgesehen, dass die jeweilige Lagerteilsicke 21 in einer der Lenkspindellagereinheitsicken 14 geführt ist. Im gezeigten ersten Ausführungsbeispiel gemäß der Fig.1 und 2 weist zusätzlich auch das Konsolenteil 7 bei beiden Seitenwangen 15 jeweils eine Konsolenteilsicke 22 auf, welche im gezeigten Ausführungsbeispiel in jeweils eine der Lagerteilsicken 21 eingreift. Der Spannbolzen 13 ist durch die Lagerteilsicken 21 und die Lenkspindellagereinheitsicken 14 hindurchgeführt. Im gezeigten Ausführungsbeispiel ist er zusätzlich auch noch durch die Konsolenteilsicken 22 hindurchgeführt. Es ist denkbar und möglich, auch bei Lenksäulen 3, die nur in ihrer Länge verstellbar sind, auf eine Konsolenteilsicke 22 zu verzichten. Die Seitenwangen 15 sind dann im Bereich der Klemmung und Verstellung bevorzugt plan ausgebildet, zumindest in der zur Lenkspindellagereinheit gerichteten Oberfläche.

Wie besonders gut in Fig. 2 zu sehen, ist es günstig, wenn, wie in diesem Ausführungsbeispiel auch realisiert, die genannten Sicken als sogenannte Innensicken ausgeführt sind. Dies ist der Fall, wenn sie in Richtung in den Bereich 33 zwischen den Seitenwangen 15 des Konsolenteils 7 bzw. in Richtung in den, den Bereich 33 bildenden Innenraum des Befestigungsbereichs 6 hinein vertieft ausgebildet sind.

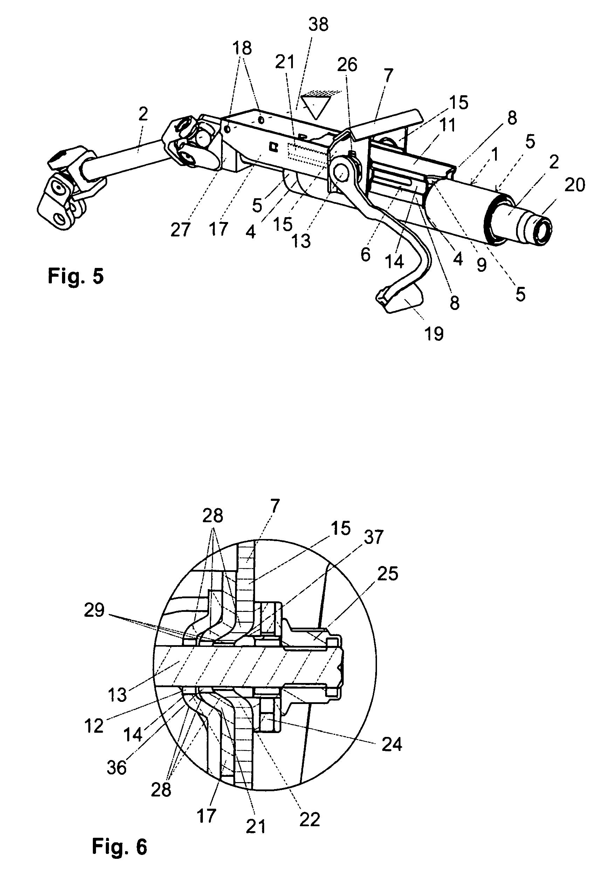

Der Bereich A aus Fig. 2 ist vergrößert noch einmal in Fig. 6 dargestellt. Hier ist besonders gut zu sehen, dass jede der Sicken 14, 21 und 22 jeweils zwei Seitenwände 28 aufweist, welche jeweils mittels eines Sickengrundes 29 miteinander verbunden sind. Der Spannbolzen 13 durchdringt jeweils den Sickengrund 29 der genannten Sicken 14, 21 und 22. Die hierzu notwendige Aussparung bzw. Öffnung ist günstigerweise nur so groß gewählt, dass noch seitliche Ränder des Sickengrundes 29 vorhanden sind. Dies ermöglicht eine höhere Steifigkeit bei der Anlage der Lagerteilsicke 21 an der jeweiligen Lenkspindellagereinheitsicke 14, da dadurch in Richtung der Mittenlängsachse 32 des Spannbolzens 13 Kräfte besonders gut übertragen werden können. Die Seitenwände 28 und hier auch die Sickengründe 29 der jeweils benachbart zueinander liegenden Sicken 14, 21 und 22 liegen flächig aneinander an. Sie sind symmetrisch bezüglich der Mittenlängsachse 32 des Spannbolzens 13 angeordnet und weisen im Sinne eines optimalen aneinander Anliegens eine geometrisch ähnliche Gestalt auf. Im ersten Ausführungsbeispiel gemäß Fig. 1 und 2 weisen die jeweils in die Konsolenteilsicken 22 von außen eingreifenden Klemmstücke 24 entsprechend der Sickenvertiefung ausgeformte Vorsprünge auf, mit denen sie in die Konsolenteilsicken 22 eingreifen. Durch das Hindurchführen des Spannbolzens 13 direkt durch die Sicken 14, 21 und hier auch 22 wirken die Spannkräfte des Spannbolzens 13 direkt auf die genannten Sicken ein, womit eine gleichermaßen einfache wie auch effektive Bauweise und Kraftübertragung realisiert wird.

Mit Vorteil ist die Durchführöffnung 12 bzw. das diese bildende Langloch in der Lenkspindellagereinheit 1 breiter als der Durchmesser des Lochs 36 im Lagerteil 17. Mit Vorteil ist der Durchmesser des Lochs 37 im Konsolenteil 7 kleiner als der Durchmesser des Lochs 36 im Lagerteil 17. Auf diese Weise kann der Verschleiß gemindert werden. Es ist auch denkbar und möglich zur Darstellung einer größeren Verstelllänge, das Loch 36 als Langloch auszubilden. Dann wäre die Breite des Langlochs anstelle des Durchmessers des Lochs 36 als Maß für die o.g. Vergleiche anzusetzen.

Allgemein ist darauf hinzuweisen, dass durch die erfindungsgemäße Konstruktion eine sehr kompakte Bauweise möglich ist, indem der Abstand zwischen dem Spannbolzen 13 und der Lenkspindel 2 sehr gering gehalten werden kann. Dies ist bevorzugt durch eine einwandige Ausführung ermöglicht, bei der die Lenkspindellagereinheit 1 durch nur eine einzige, vorzugsweise umfängliche Wand gebildet wird, abgesehen von etwa möglichen Anbauteilen, die für weitere Funktionen noch angebracht sein können. Auf diese Weise sind zwischen dem Spannbolzen 13 und der Lenkspindel 2 keine Wände, die entsprechende Wandstärken besitzen und einen erhöhten Mindestabstand zwischen Lenkspindel 2 und Spannbolzen 13 fordern, vorhanden. In diesem Zusammenhang ist also, wie hier auch realisiert, günstigerweise vorgesehen, dass zumindest in einem Längenabschnitt des Spannbolzens 13 für jede eingestellte Verstellposition der Raum zwischen dem Längenabschnitt des Spannbolzens 13 und der Lenkspindel 2 frei von Wandabschnitten der Lenkspindellagereinheit und/oder von sonstigen Bauteilen ist. Mit anderen Worten ist in diesem Bereich somit vorgesehen, dass sich ausschließlich Luft zwischen der Lenkspindel 2 und dem Spannbolzen 13 befindet. Mit Vorteil umfasst der Längenabschnitt des Spannbolzens 13 die vollständige Länge des Spannbolzens 13, die zwischen den Innenseiten der Seitenwangen 15 bzw. der Sickengründe 29 liegt. Günstig ist es dabei auch, wenn sich die Lenkspindel 2 und der Spannbolzen 3 bzw. deren Längsachsen nicht schneiden. Weiters ist es günstig, wenn die Lenkspindel mit ihrem Außenumfang nicht in den an ihr, vorzugsweise orthogonal, vorbeigeführten Spannbolzen 13 bzw. dessen Längsachse hineinragt.

Im ersten Ausführungsbeispiel weisen die Lenkspindellagereinheitsicken 14 als Durchführöffnungen 12 jeweils ein Langloch auf, durch die der Spannbolzen 13 hindurchgeführt ist. Durch diese in Längsrichtung 31 der Lenkspindel 2 längserstreckten Langlöcher ist es möglich, die Lenkspindellagereinheit 1 in den Längsrichtungen 31 relativ zum Konsolenteil 7 zu verstellen.

Die Lagerteilsicken 21 und die Konsolenteilsicken 22 müssen nicht längserstreckt ausgebildet sein. Durch die Längserstreckung des Lagerteils 17 über seine Länge 30 und die in Längsrichtung 31 vom Spannbolzen 13 entfernt realisierte Anordnung der Lagerteilbefestigung 18 wird eine sehr verwindungssteife und spielarme Lagerung der Lenkspindellagereinheit 1 erreicht. Die Verwindungssteifigkeit der Konstruktion kann aber noch weiter erhöht werden, indem man, wie im ersten Ausführungsbeispiel realisiert, auch die Lagerteilsicken 21 längserstreckt ausführt. Hierdurch wird der Eingriff der Lagerteilsicken 21 in die Lenkspindellagereinheitsicken 14 in Längsrichtung 31 deutlich verlängert, was die Verwindungssteifigkeit der Gesamtkonstruktion weiter erhöht.

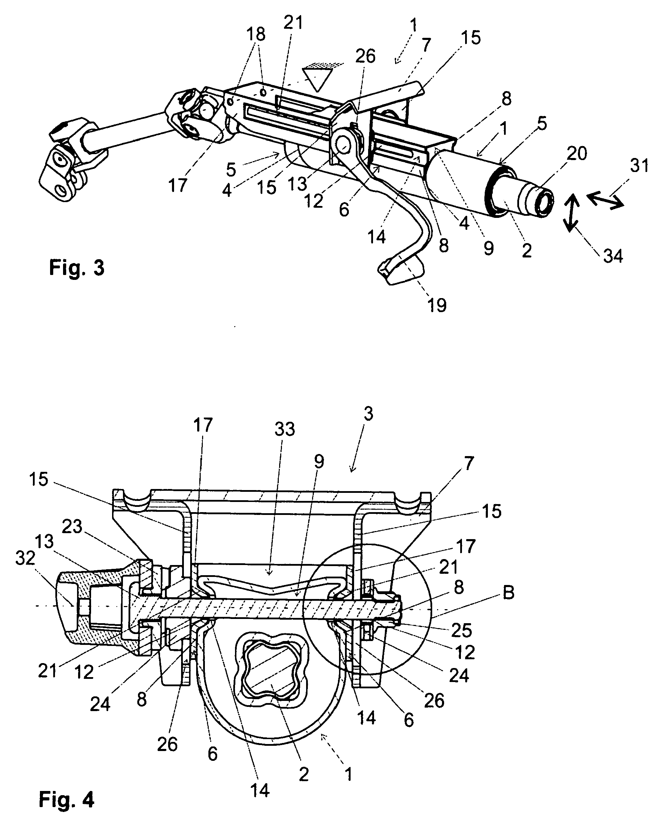

Bevor nun auf das Ausführungsbeispiel gemäß der Fig. 3 und 4 eingegangen wird, ist darauf hinzuweisen, dass in allen gezeigten Ausführungsbeispielen die jeweiligen Sickenanordnungen zweiseitig, also an beiden Seitenwangen 15 des Konsolenteils 7 realisiert sind. Dies ist im Sinne einer spielarmen steifen Konstruktion günstig, aber nicht zwingend notwendig. Es wäre auch denkbar, die entsprechenden Sickenanordnungen im Bereich nur einer der Seitenwangen 15 zu realisieren.

Im Ausführungsbeispiel gemäß Fig. 3 und 4 ist zusätzlich zur Längenverstellbarkeit der Lenksäule 3 in Längsrichtungen 31 noch eine Höhenverstellbarkeit dieser Lenksäule 3 bzw. deren Lenkspindel 2 in den Höhenrichtungen 34 vorgesehen. Hierzu ist in diesem Ausführungsbeispiel in den beiden Seitenwangen 15 des Konsolenteils 7 jeweils ein vertikal verlaufendes Langloch 26 angeordnet, in dem der Spannbolzen 13 längsverschieblich angeordnet ist. Höhen- wie auch Längenverstellung sind allerdings nur dann möglich, wenn die Feststelleinrichtung sich im geöffneten Zustand befindet. Im geschlossenen Zustand der Feststelleinrichtung sind diese Verstellmöglichkeiten zumindest bei beim normalen Betrieb auftretenden Kräften nicht gegeben.

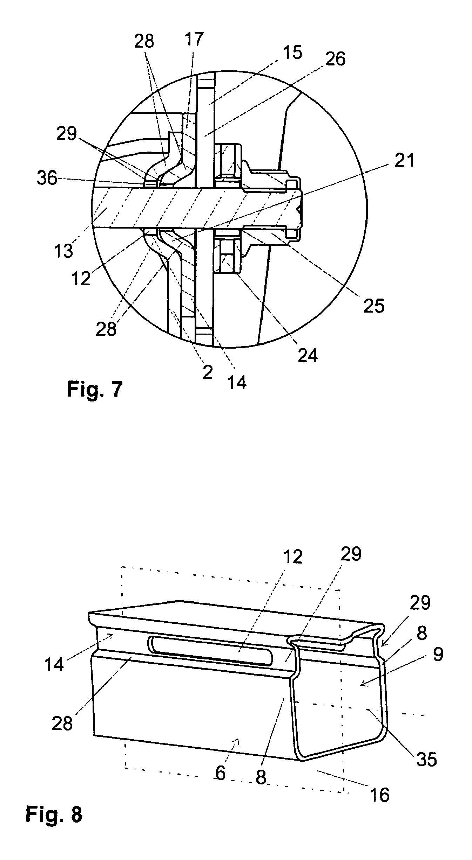

Um auch die Höhenverstellbarkeit in Höhenrichtungen 34 realisieren zu können, weist im Ausführungsbeispiel gemäß der Fig. 3 und 4 die Lagerteilbefestigung 18 des Lagerteils 17 ein Schwenkgelenk auf. Das Lagerteil 17 kann um dieses Schwenkgelenk der Lagerteilbefestigung 18 zusammen mit der Lenkspindellagereinheit 1 um eine Schwenkachse 38 verschwenkt werden, wenn eine Höhenverstellung durchgeführt wird. Ein weiterer Unterschied zum ersten Ausführungsbeispiel besteht darin, dass bei dieser Variante eine Konsolenteilsicke an den beiden Seitenwangen 15 entfällt. In den Seitenwangen 15 sind beidseitig die genannten Langlöcher 26 vorgesehen. In diesem Ausführungsbeispiel weisen die Klemmstücke 24 entsprechend auch keine Nasen auf, mit denen sie in die Sicken eingreifen würden. Trotzdem ist vorgesehen, dass die Lagerteilsicken 21 in den Lenkspindellagereinheitsicken 14 anliegen und der Spannbolzen 13 durch diese Sicken hindurchtritt. All dies ist in Fig. 7 noch einmal vergrößert gezeigt, indem in dieser Figur der Ausschnitt B aus Fig. 4 herausgezeichnet ist. Bis auf die bereits genannten Unterschiede gilt, soweit anwendbar, das zur Fig. 6 Geschilderte.

Abgesehen von den genannten Unterschieden ist das Ausführungsbeispiel gemäß der Fig. 3 und 4 im Wesentlichen so wie das erste Ausführungsbeispiel ausgeführt, sodass sich zusätzliche Erläuterungen hierzu erübrigen.

Generell ist darauf hinzuweisen, dass die Lenkspindel 2 bevorzugt zumindest zweimal an zwei distanziert zueinander angeordneten Stellen der Lenkspindellagereinheit 1, hier in den umfangsgeschlossenen Bereichen 5 der Lenkspindellagereinheit 1 mittels hier nicht explizit eingezeichneten, aber an sich bekannten Lagern drehbar gelagert ist. In der in Fig. 5 gezeigten, abgewandelten Ausführungsform des Ausführungsbeispiels gemäß der Fig. 3 und 4 ist ein Lenkspindellager 27 am motorseitigen Ende des Lagerteils 17 vorgesehen. Ansonsten entspricht dieses Ausführungsbeispiel gemäß Fig. 5 der Variante gemäß Fig. 3 und 4. Es ist auch denkbar und möglich, dieses zusätzliche Lenkspindellager 27 direkt an der hier nicht gezeigten Fahrzeugkarosserie zu befestigen oder in ein hier nicht gezeigtes Getriebe für eine Hilfskraftunterstützung der Lenkbewegung zu integrieren. Insbesondere für diese Fälle ist es denkbar und möglich, die Lenkspindel nur an einer einzigen Lagerung in der Lenkspindellagereinheit 1 drehbar zu lagern.

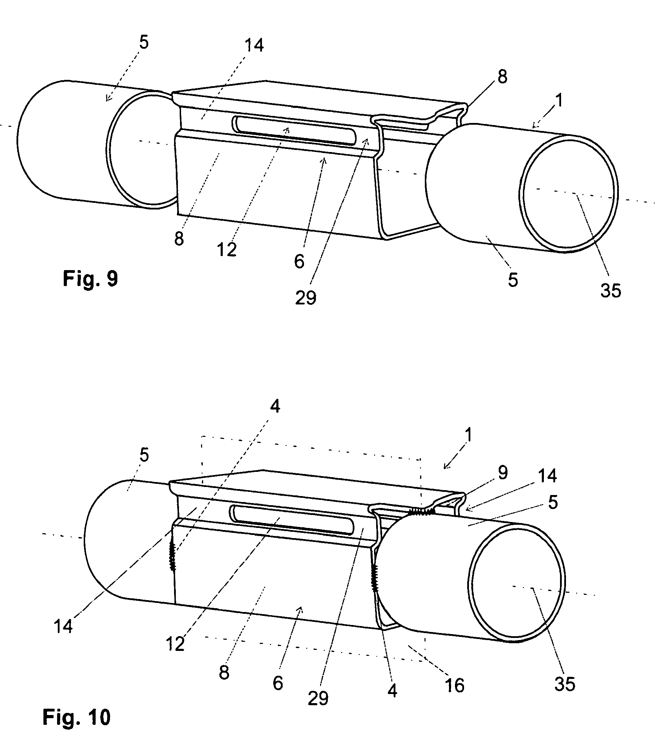

Fig. 10 zeigt nun separat, also losgelöst von der restlichen Lenksäule 3, die erfindungsgemäße Lenkspindellagereinheit 1, wie sie in den Ausführungsbeispielen der Lenksäule 3 gemäß der Fig. 1 bis 5, aber auch in anderen erfindungsgemäßen Varianten eingebaut werden kann. Die erfindungsgemäßen Varianten sind, wie gesagt, dadurch gekennzeichnet, dass der Befestigungsbereich 6 und der umfangsgeschlossene Bereich 5 als zunächst separate und dann miteinander, vorzugweise direkt, verbundene, vorzugsweise verschweißte, Bauteile ausgebildet sind. Fig. 9 zeigt die drei Bauteile vor ihrer Verbindung in einer Art Explosionsdarstellung, Fig. 8 zeigt den Befestigungsbereich 6, der in Fig. 10 dargestellten Lenkspindellagereinheit 1.

Wie bereits ausgeführt, ist es ein Grundgedanke der Erfindung die einzelnen Bauteile der Lenkspindellagereinheit zunächst separat voneinander zu fertigen und dann miteinander zu verbinden. Hierdurch ist es sehr einfach, verschiedene Querschnittsformen, Wandstärken und dergleichen in verschiedenen Bereichen der Lenkspindellagereinheit zu realisieren und trotzdem eine besonders stabile und verbindungssteife Lenkspindellagereinheit 1 zur Verfügung zu stellen. Wie besonders gut in Fig. 8 zu sehen, wird der Befestigungsbereich 6 dieses Ausführungsbeispiels einstückig also als ein Teil ausgebildet. Es kann sich z.B. um ein in diesem Beispiel umfangsgeschlossenes Strangpressprofil handeln, wie es kostengünstig in großen Stückzahlen hergestellt werden kann. Alternativ ist es auch möglich, den Befestigungsbereich bzw. das ihn bildende Bauteil als Blechumformteil oder als Gussteil oder als, beispielsweise kohlefaserverstärktes, Verbundwerkstoffteil auszubilden. Im gezeigten Ausführungsbeispiel ist in den Befestigungsstegen 8 dieses Befestigungsbereichs 6 ebenfalls eine Lenkspindellagereinheitsicke 14 angeordnet. In deren jeweiligem Sickengrund 29 befindet sich die in Form jeweils eines Langlochs ausgebildeten Durchführöffnung 12. Eingezeichnet ist in Fig. 8 auch die Symmetrieebene 16 des Befestigungsbereiches 6 sowie die Längsachse 35 der in Fig. 8 bis 10 nicht dargestellten Lenkspindel 2 der Lenksäule 3.

Die in Fig. 9 dargestellten umfangsgeschlossenen Bereiche 5 zur Aufnahme eines Lagers zur Lagerung der Lenkspindel 2 sind im gezeigten Ausführungsbeispiel zylindermantelförmig bzw. rohrförmig ausgebildet. Es kann sich hier um einfache Rohrabschnitte handeln, die sehr kostengünstig zu beschaffen sind. Es kann sich aber auch um anders ausgeformte Querschnitte handeln. Auch die die Bereiche 5 bildenden Bauteile können als Blechumformteil oder Strangpressprofil oder Gussteil oder als, beispielsweise kohlefaserverstärktes, Verbundwerkstoffteil hergestellt sein. Jedenfalls ist es durch das zunächst getrennt voneinander Ausbilden der Bereiche 5 und des Befestigungsbereiches 6 und das anschließende miteinander Verbinden möglich, sehr verschiedene Querschnittsformen in den einzelnen Abschnitten der Lenkspindellagereinheit 1 kostengünstig zu realisieren. Durch das miteinander Verbinden bzw. Verschweißen dieser einzelnen Bauteile an den Schweißnähten 4 ist dann kostengünstig die gesamte Lenkspindellagereinheit 1 hergestellt. In diesem Ausführungsbeispiel gemäß der Fig. 8 bis 10 ist auch verdeutlicht, dass die den Befestigungsbereich 6 und den oder die Bereiche 5 bildenden Bauteile in Längsrichtung also in Richtung der Längsachse 35 der Lenkspindel 2 hintereinander angeordnet bzw. miteinander verbunden sind.

Wie bereits anfangs ausgeführt, kann dabei vorgesehen sein, dass der Befestigungsbereich 6 und der oder die Bereiche 5 jeweils Stoß an Stoß miteinander verbunden sind. Genauso gut ist es aber auch möglich, dass zwischen dem Befestigungsbereich und dem jeweiligen Bereich 5 eine gewisse Überlappung realisiert wird. Diese kann z.B. für das Anbringen einer Schweißnaht oder einer Schraubverbindung günstig sein.

Im gezeigten Ausführungsbeispiel ist der Befestigungsbereich 6 zwischen zwei Bereichen 5 zur Aufnahme von je zumindest einem Lager zur Lagerung der Lenkspindel 2 mittig angeordnet. Dies muss nicht zwingend so sein, es ist auch denkbar am Befestigungsbereich 6 nur einen entsprechenden umfangsgeschlossenen Bereich 5 zur Aufnahme des genannten Lagers anzuordnen. Die Lenkspindel 2 kann dann auch an anderer Stelle bzw. losgelöst von der Lenkspindellagereinheit 1 noch einmal gelagert sein, z.B. in einer Hilfskrafteinrichtung oder an einem entsprechenden Teil eines Konsolenteils 7.

Zur Erleichterung der Verbindung zwischen dem Befestigungsbereich 6 und dem mindestens einen umfangsgeschlossenen Bereich 5 können zusätzliche Formelemente vorgesehen sein, mit denen die Bauteile, vor dem Fügen, zueinander ausgerichtet positioniert werden können. Entlang dieser Formelemente können die Bauteile in einer Art Spielpassung oder einer leichten Presspassung vorpositioniert werden. Im folgenden Verfahrensschritt werden dann die Bauteile miteinander verbunden, beispielsweise durch Schweißen, bevorzugt Laserschweißen.
Im Sinne einer möglichst kostengünstigen Ausführung ist bevorzugt vorgesehen, dass, wie im gezeigten Ausführungsbeispiel gemäß der Fig. 8 bis 10 auch realisiert, die Lenkspindellagereinheit 1 überall einwandig ausgebildet ist.

Zum Zusammenschweißen der einzelnen Bauteile 5 und 6 können klassische Schweißverfahren genau so wie bei entsprechender Formgebung das Orbitalreibschweißen oder das Laserschweißen eingesetzt werden. Die Ausgestaltung mit mehreren zusammengesetzten Bauteilen hat den Vorteil, dass die Bauteile sehr fertigungsgerecht und/oder schnittstellengerecht gestaltet werden können. Insbesondere ist es so besonders einfach möglich, an verschiedenen Stellen verschiedene Wandungsdicken vorzusehen. So können dann z.B. die umfangsgeschlossenen Bereiche zur Aufnahme je zumindest eines Lagers zur Lagerung der Lenkspindel 2 dünnwandiger ausgebildet sein, als der Befestigungsbereich 6. Auch kann die Profilform im Inneren der Bereiche 5 rund und außen z.B. mehreckig ausgeführt sein, um einen einfachen Einbau in die Karosserie verschiedener Fahrzeuge zu ermöglichen.

Es ist auch darauf hinzuweisen, dass der Befestigungsbereich 6 und/oder der oder die Bereiche 5 auch in sich mehrteilig aufgebaut sein können. So kann es sich bei diesen Bauteilen auch einzeln oder jeweils um einen Zusammenbau aus Halbschalen handeln, welche z.B. in der Symmetrieebene 16 zusammengesetzt sein können. Gerade eine derartige Technologie ist gut geeignet für die Darstellung der Lenkspindellagereinheit aus einem Verbundwerkstoff wie beispielsweise einem Kohlefaserverbundwerkstoff.

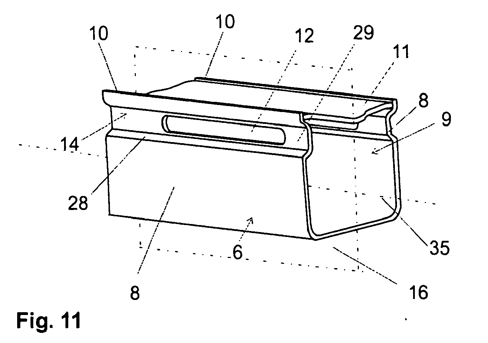

Fig. 11 zeigt eine Alternative zum Befestigungsbereich 6 der Fig. 8. Anhand von Fig. 11 wird wiederum exemplarisch gezeigt, dass es genau so gut möglich ist, den Befestigungsbereich 6 aus mehreren Teilen, vorzugsweise aus mehreren Strangpressprofilen, Blechumformteilen, Gussteilen und/oder oder als, beispielsweise kohlefaserverstärkten, Verbundwerkstoffteilen zusammenzusetzen, vorzugsweise zusammenzuschweißen. Auch hierdurch kann eine durchgängig einwandige Ausbildung der Lenkspindellagereinheit 1 erreicht werden. Bei der Variante gemäß Fig. 11 ist der Befestigungsbereich 6 aus zwei Blechumformteilen gebildet. Aus dem einen Blechumformteil werden durch Umformung der Befestigungsstege 8 und der sie verbindende Abschnitt gebildet. Das zweite Blechteil wird durch das gesonderte Blech 11 mit seinem V-förmigen Querschnitt gebildet. Durch das Einsetzen des gesonderten Blechs 11 zwischen die Befestigungsstege 8 an deren frei auskragenden Enden 10 wird die Öffnung 9 zwischen den Befestigungsstegen 8 nach oben hin begrenzt. Der so ausgebildete Befestigungsbereich 6 kann dann z.B. anstelle des in Fig. 8 gezeigten Befestigungsbereichs 6 die Lenksäule gemäß Fig. 10 eingebaut werden, indem man ihn mit den zwei umfangsgeschlossenen Bereichen 5 zur Aufnahme der Lager zur Lagerung der Lenkspindel verbindet bzw. verschweißt. Zum V-förmigen Querschnitt des gesonderten Blechs 11 wird noch darauf hingewiesen, dass es günstig ist, wenn die Umbiegestelle bzw. die Spitze des V-förmigen Querschnitts in Längsrichtung 31 bzw. bevorzugt in der Symmetrieebene 16 des Befestigungsbereichs 6 verläuft. In dieser Symmetrieebene 16 verläuft bevorzugt auch die Längsachse 35 der Lenkspindel 2 um die die Lenkspindel 2 drehbar in der Lenkspindellagereinheit 1 gelagert ist. Denkbar und möglich ist es jedoch auch, das Verbindungsblech in einer W-Form auszubilden. Die das V, beziehungsweise W bildenden Flächen können dabei auch bogenförmig ausgebildet sein.

Wenn in der vorgängigen Beschreibung als Werkstoff Blech genannt ist, so ist festzustellen, dass die Bauteile oder die Zwischenformen beispielsweise aus Stahlblech, Aluminiumblech, Magnesiumblech aber auch aus Kohlenstofffaser-Verbundwerkstoffen oder anderen Verbundwerkstoffen gefertigt sein können. Anstelle von Blechen können auch Gussteile als Vorform- oder Fertigteile eingesetzt werden. Es ist auch denkbar und möglich einen Mix aus verschiedenen Werkstoffen und verschiedenen Herstellmethoden für die Vorformteile zur Darstellung der Lenkspindellagereinheit einzusetzen. Der Begriff des Blechs und insbesondere der des Mantelblechs 4, im Sinne eines Mantels, ist also entsprechend weit im Sinne einer Wandung bzw. eines Mantels auszulegen und keinesfalls auf metallische bzw. rein metallische Bleche beschränkt.

Soweit anwendbar sind alle in den einzelnen Ausführungsformen gezeigten Merkmale untereinander frei kombinierbar ohne den Bereich der Erfindung zu verlassen.

**Legende zu den Hinweisziffern:**

| | | | |
|---|---|---|---|
| 1 | Lenkspindellagereinheit | 20 | Lenkradanschluss |
| 2 | Lenkspindel | 21 | Lagerteilsicke |
| 3 | Lenksäule | 22 | Konsolenteilsicke |
| 4 | Schweißnaht | 23 | Nockenplatte |
| 5 | umfangsgeschlossener Bereich 30 | 24 | Klemmstück |
| 6 | Befestigungsbereich | 25 | Spannmutter |
| 7 | Konsolenteil | 26 | Langloch |
| 8 | Befestigungssteg | 27 | Lenkspindellager |
| 9 | Öffnung | 28 | Seitenwand |
| 10 | frei auskragendes Ende 35 | 29 | Sickengrund |
| 11 | gesondertes Blech | 30 | Länge |
| 12 | Durchführöffnung | 31 | Längsrichtungen |
| 13 | Spannbolzen | 32 | Mittenlängsachse |
| 14 | Lenkspindellagereinheitssicke | 33 | Bereich |
| 15 | Seitenwange 40 | 34 | Höhenrichtungen |
| 16 | Symmetrieebene | 35 | Längsachse |
| 17 | Lagerteil | 36 | Loch |
| 18 | Lagerteilbefestigung | 37 | Loch |
| 19 | Betätigungshebel | 38 | Schwenkachse |

## Patentansprüche

1. Lenkspindellagereinheit (1) zur drehbaren Lagerung einer Lenkspindel (2) einer Lenksäule (3) für ein Kraftfahrzeug, wobei die Lenkspindellagereinheit (1) zumindest einen umfangsgeschlossenen Bereich (5) zur Aufnahme zumindest eines Lagers zur drehbaren Lagerung der Lenkspindel (2) und zumindest einen Befestigungsbereich (6) zur Befestigung der Lenkspindeflagereinheit (1) an einem Konsolenteil (7) der Lenksäule (3) aufweist, wobei im Befestigungsbereich (6) zumindest eine Durchführöffnung (12), insbesondere zwei Durchführöffnungen (12), zum Hindurchführen eines Spannbolzens (13) der Lenksäule (3) angeordnet ist bzw. sind, wobei der Befestigungsbereich (6) und der umfangsgeschlossene Bereich (5) als zunächst separate und dann miteinander verbundene Bauteile ausgebildet sind, **dadurch gekennzeichnet, dass** die den Befestigungsbereich (6) und den umfangsgeschlossenen Bereich (5) oder die umfangsgeschlossenen Bereiche (5) bildenden Bauteile in Richtung der Längsachse (35) der Lenkspindel (2) hintereinander angeordnet sind.

2. Lenkspindellagereinheit (1) nach Anspruch 1, **dadurch gekennzeichnet, dass** der Befestigungsbereich (6) einstückig ausgebildet ist.

3. Lenkspindellagereinheit (1) nach Anspruch 1, **dadurch gekennzeichnet, dass** der Befestigungsbereich (6) aus mehreren Teilen zusammengesetzt ist.

4. Lenkspindellagereinheit (1) nach einem der Ansprüche 1 bis 3, **dadurch gekennzeichnet, dass** die Lenkspindellagereinheit (1) im Befestigungsbereich (6) zumindest bereichsweise umfangsgeschlossen ausgebildet ist.

5. Lenkspindellagereinheit (1) nach einem der Ansprüche 1 bis 4, **dadurch gekennzeichnet, dass** die Lenkspindellagereinheit (1) im Befestigungsbereich (6) und/oder im umfangsgeschlossenen Bereich (5) zur Aufnahme zumindest eines Lagers und/oder überall einwandig ausgebildet ist.

6. Lenkspindellagereinheit (1) nach einem der Ansprüchen 1 oder 3 bis 5, **dadurch gekennzeichnet, dass** der Befestigungsbereich (6) zumindest zwei voneinander beabstandete Befestigungsstege (8) mit jeweils frei auskragenden Enden (10) aufweist, wobei in den Befestigungsstegen jeweils eine der Durchführöffnungen (12) angeordnet ist und die frei auskragenden Enden (10) mittels eines gesonderten Verbindungsbleches (11) miteinander verbunden sind.

7. Lenkspindellagereinheit (1) nach einem der Ansprüche 1 bis 6, **dadurch gekennzeichnet, dass** die Lenkspindellagereinheit (1) zumindest zwei umfangsgeschlossene Bereiche (5) zur Aufnahme jeweils zumindest eines Lagers zur drehbaren Lagerung der Lenkspindel (2) aufweist und der Befestigungsbereich (6) zwischen den umfangsgeschlossenen Bereichen (5) angeordnet ist.

8. Lenkspindellagereinheit (1) nach Anspruch 7, **dadurch gekennzeichnet, dass** die umfangsgeschlossenen Bereiche (5) ausschließlich über den zwischen ihnen angeordneten Befestigungsbereich (6) miteinander verbunden sind.

9. Lenkspindellagereinheit (1) nach einem der Ansprüche 1 bis 8, **dadurch gekennzeichnet, dass** in der Lenkspindellagereinheit (1) zumindest eine Lenkspindellagereinheitsicke (14) angeordnet ist und die Durchführöffnung (12) in einer Lenkspindellagereinheitsicke (14) angeordnet ist.

10. Lenksäule (3) für ein Kraftfahrzeug mit einem, zur Befestigung der Lenksäule (3) an einer Karosserie des Kraftfahrzeugs vorgesehenen Konsolenteil (7), welches zumindest zwei Seitenwangen (15) aufweist, **dadurch gekennzeichnet, dass** eine Lenkspindellagereinheit (1) nach einem der Ansprüche 1 bis 9 mit ihrem Befestigungsbereich (6) zwischen den Seitenwangen (15) angeordnet und mittels der Befestigungsstege (8) an den Seitenwangen (15) gehalten ist.

11. Verfahren zur Herstellung einer Lenkspindellagereinheit (1) nach einem der Ansprüche 1 bis 9, **dadurch gekennzeichnet, dass** der Befestigungsbereich (6) und der umfangsgeschlossene Bereich (5) zunächst als separate Bauteile ausgebildet und dann miteinander verbunden werden.

## Claims

1. Steering shaft bearing unit (1) for the rotatable support of a steering shaft (2) of a steering column (3) for a motor vehicle, wherein the steering shaft bearing unit (1) comprises at least one circumferentially closed region (5) for receiving at least one bearing for the rotatable support of the steering shaft (2) and at least one securement region (6) for securing the steering shaft bearing unit (1) on a bracket part (7) of the steering column (3), wherein in the securement region (6) at least one through-opening (12), in particular two through-openings (12), is or are disposed for guiding through a clamp bolt (13) of the steering column (3), wherein the securement region (6) and the circumferentially closed region (5) are developed as initially separate structural parts that are subsequently connected with one another, **characterised in that** the structural parts forming the securement region (6) and the circumferentially closed region (5) or the circumferentially closed regions (5) are disposed sequentially in the direction of the longitudinal axis (35) of the steering shaft (2).

2. Steering shaft bearing unit (1) according to claim 1, **characterised in that** the securement region (6) is integrally formed.

3. Steering shaft bearing unit (1) according to claim 1, **characterised in that** the securement region (6) is assembled from a plurality of parts.

4. Steering shaft bearing unit (1) according to one of claims 1 to 3, **characterised in that** the steering shaft bearing unit (1) is developed in the securement region (6) as at least regionally circumferentially closed.

5. Steering shaft bearing unit (1) according to one of claims 1 to 4, **characterised in that** the steering shaft bearing unit (1) in the securement region (6) and/or in the circumferentially closed region (5) is developed for receiving at least one bearing and/or entirely as a single wall.

6. Steering shaft bearing unit (1) according to one of claims 1 or 3 to 5, **characterised in that** the securement region (6) comprises at least two securement webs (8), spaced apart from one another, each with freely projecting ends (10), in each of the securement webs one of the through-openings (12) being disposed and the freely projecting ends (10) being connected with one another by a separate connection metal sheet (11).

7. Steering shaft bearing unit (1) according to one of claims 1 to 6, **characterised in that** the steering shaft bearing unit (1) comprises at least two circumferentially closed regions (5) each for receiving at least one bearing for the rotatable support of the steering shaft (2), and the securement region (6) is disposed between the circumferentially closed regions (5).

8. Steering shaft bearing unit (1) according to claim 7, **characterised in that** the circumferentially closed regions (5) are exclusively connected with one another via the securement region (6) disposed between them.

9. Steering shaft bearing unit (1) according to one of claims 1 to 8, **characterised in that** in the steering shaft bearing unit (1) at least one steering shaft bearing unit bead (14) is disposed and the through-opening (12) is disposed in a steering shaft bearing unit bead (14).

10. Steering column (3) for a motor vehicle with a bracket part (7) provided for securing the steering column (3) on a body of the motor vehicle, which bracket part comprises at least two side jaws (15), **characterised in that** a steering shaft bearing unit (1) according to one of claims 1 to 9 is disposed with its securement region (6) between the side jaws (15) and retained on the side jaws (15) by means of securement webs (8).

11. Method for the production of a steering shaft bearing unit (1) according to one of claims 1 to 9, **characterised in that** the securement region (6) and the circumferentially closed region (5) are initially developed as separate structural parts and subsequently connected with one another.

## Revendications

1. Unité de palier d'arbre de direction (1) pour le logement rotatif d'un arbre de direction (2) d'une colonne de direction (3) d'un véhicule automobile, ladite unité de palier d'arbre de direction (1) présentant au moins une zone fermée sur sa périphérie (5), destinée à recevoir au moins un palier pour le logement rotatif de l'arbre de direction (2), et au moins une zone de fixation (6) destinée à fixer l'unité de palier d'arbre de direction (1) sur une pièce en console (7) de la colonne de direction (3), au moins une ouverture de passage (12), en particulier deux ouvertures de passage (12) étant disposées dans la zone de fixation (6) pour la traversée d'une goupille de serrage (13) de la colonne de direction (3), la zone de fixation (6) et la zone fermée sur sa périphérie (5) étant prévues comme composants initialement séparés avant d'être raccordés l'un à l'autre, **caractérisée en ce que** les composants formant la zone de fixation (6) et la zone fermée sur sa périphérie (5) ou les zones fermées sur leur périphérie (5), sont disposés successivement dans le sens de l'axe longitudinal (35) de l'arbre de direction (2).

2. Unité de palier d'arbre de direction (1) selon la revendication 1, **caractérisée en ce que** la zone de fixation (6) est formée d'une seule pièce.

3. Unité de palier d'arbre de direction (1) selon la revendication 1, **caractérisée en ce que** la zone de fixation (6) est formée de plusieurs pièces.

4. Unité de palier d'arbre de direction (1) selon l'une des revendications 1 à 3, **caractérisée en ce que** ladite unité de palier d'arbre de direction (1) dans la zone de fixation (6) est prévue avec une périphérie au moins partiellement fermée.

5. Unité de palier d'arbre de direction (1) selon l'une des revendications 1 à 4, **caractérisée en ce que** dans la zone de fixation (6) et/ou dans la zone fermée sur sa périphérie (5), ladite unité de palier d'arbre de direction (1) est prévue pour la réception d'au moins un palier et/ou partout avec une seule paroi.

6. Unité de palier d'arbre de direction (1) selon l'une des revendications 1 ou 3 à 5, **caractérisée en ce que** la zone de fixation (6) présente au moins deux traverses de fixation (8) espacées l'une de l'autre ayant chacune des extrémités en saillie libre (10), une des ouvertures de passage (12) étant ménagée dans chacune de traverses de fixation et les extrémités en saillie libre (10) étant reliées l'une à l'autre par une plaque de connexion (11) séparée.

7. Unité de palier d'arbre de direction (1) selon l'une des revendications 1 à 6, **caractérisée en ce que** ladite unité de palier d'arbre de direction (1) présente au moins deux zones fermées sur leur périphérie (5) destinées à recevoir au moins un palier pour le logement rotatif de l'arbre de direction (2) et **en ce que** la zone de fixation (6) est disposée entre les zones fermées sur leur périphérie (5).

8. Unité de palier d'arbre de direction (1) selon la revendication 7, **caractérisée en ce que** les zones fermées sur leur périphérie (5) sont raccordées l'une à l'autre exclusivement par la zone de fixation (6) disposée entre elles.

9. Unité de palier d'arbre de direction (1) selon l'une des revendications 1 à 8, **caractérisée en ce que** dans ladite unité de palier d'arbre de direction (1) est disposée au moins une gorge (14) d'unité de palier d'arbre de direction et **en ce que** l'ouverture de passage (12) est ménagée dans une gorge (14) d'unité de palier d'arbre de direction.

10. Colonne de direction (3) pour un véhicule automobile avec une pièce en console (7) prévue pour la fixation de la colonne de direction (3) sur une carrosserie du véhicule automobile et présentant au moins deux ailes latérales (15), **caractérisée en ce qu'**une unité de palier d'arbre de direction (1) selon l'une des revendications 1 à 9 est disposée avec sa zone de fixation (6) entre les ailes latérales (15) et est maintenue contre les ailes latérales (15) par les traverses de fixation (8).

11. Procédé de fabrication d'une unité de palier d'arbre de direction (1) selon l'une des revendications 1 à 9, **caractérisé en ce que** la zone de fixation (6) et la zone fermée sur sa périphérie (5) sont prévues comme composants initialement séparés avant d'être raccordés l'un à l'autre.
